**Europäisches Patentamt**

**European Patent Office**

**Office européen des brevets**

(11) Veröffentlichungsnummer: **0 362 473 B1**

# EUROPÄISCHE PATENTSCHRIFT

(45) Veröffentlichungstag der Patentschrift: **06.10.93**

(51) Int. Cl.⁵: **G01S 3/784**, G02B 6/28

(21) Anmeldenummer: **89110923.3**

(22) Anmeldetag: **16.06.89**

(54) **Laserwarnsensor.**

(30) Priorität: **04.10.88 DE 3833634**

(43) Veröffentlichungstag der Anmeldung:
**11.04.90 Patentblatt 90/15**

(45) Bekanntmachung des Hinweises auf die
Patenterteilung:
**06.10.93 Patentblatt 93/40**

(84) Benannte Vertragsstaaten:
**FR GB IT**

(56) Entgegenhaltungen:
**EP-A- 0 082 045       EP-A- 0 096 327
DE-A- 3 525 518       FR-A- 2 492 115
GB-A- 2 112 244       US-A- 4 136 929**

(73) Patentinhaber: **Deutsche Aerospace AG
Patente
D-81663 München(DE)**

(72) Erfinder: **Poisel, Hans, Dr.
Neustädter Strasse 6
D-8060 Dachau(DE)**
Erfinder: **Trommer, Gert, Dr.
Connollystrasse 16
D-8000 München 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

## Beschreibung

Die Erfindung bezieht sich auf einen Laserwarnsensor mit Richtungsauflösung gemäß dem Gattungsbegriff des Anspruchs 1.

Solche Laserwarnsensoren sind durch die DE-PS 35 25 518 der Patentinheserin bekanntgeworden. Bei diesen Sensoren wird die Winkelinformation der Azimut- und Elevationsreihen mittels verschieden langer Glasfaser-Verzögerungsleitungen in eine definierte Laufzeitdifferenz zwischen Start- und jeweiliger Stop-Leitung codiert. Nun hat sich gezeigt, daß eine genaue Detektion des Winkels eine hohe Präzision der die Laufzeitmessung durchführenden Elektronik erfordert. Um eine hohe Genauigkeit zu erreichen sind relativ große Laufzeitunterschiede zwischen den verschiedenen Stop-Leitungen notwendig und daher entsprechend lange Lichtleitfasern, die bis zu voluminösen Faserspulen führen können, erforderlich.

Der vorliegenden Erfindung liegt die Aufgabe zugrunde, einen Laserwarnsensor der eingangs genannten Art dahingehend zu verbessern, daß der Lichtleitfaseraufwand minimiert und eine Vereinfachung der elektronischen Auswerteinheit bei gleichbleibender Genauigkeit ermöglicht wird.

Diese Aufgabe wird durch die im Anspruch 1 aufgezeigten Maßnahmen gelöst. In den abhängigen Ansprüchen sind Ausgestaltungen und Weiterbildungen angegeben und in der nachfolgenden Beschreibung ist ein Ausführungsbeispiel erläutert. Die Figuren der Zeichnung ergänzen die Erläuterung. Es zeigen :

Fig.1    ein Schemabild eines Rückkoppelelementes,

Fig. 2    ein Diagramm des Eingangssignals und ein Diagramm des entsprechenden Ausgangssignals,

Fig. 3    ein Blockschaltbild der Gesamtdetektionseinrichtung in schematischer Darstellung.

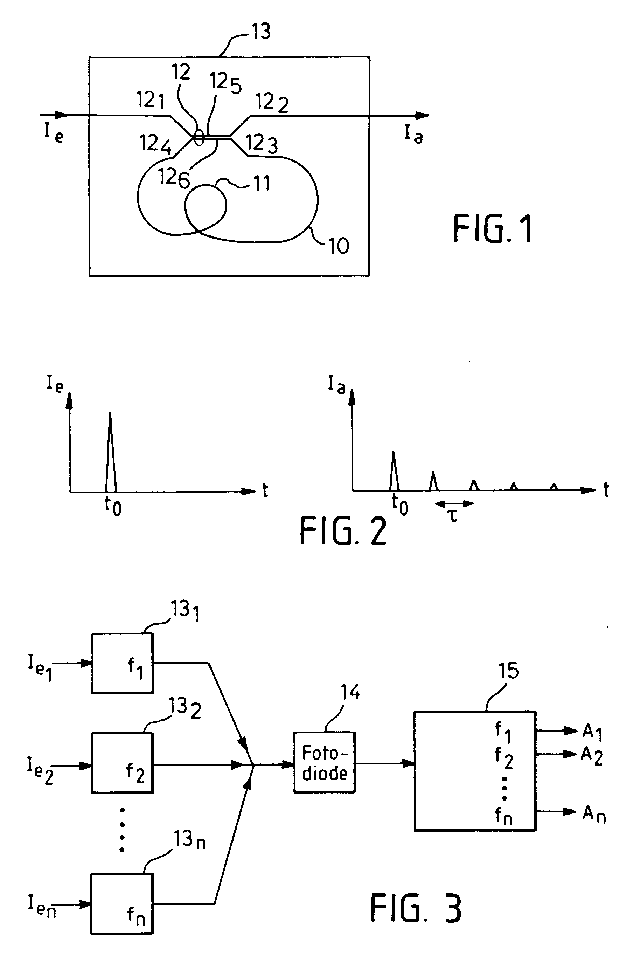

Der Laserwarnsensor des nachfolgend beschriebenen Ausführungsbeispiels wird aus einer Kombination mehrerer Rückkoppeleinheiten $13_1$ bis $13_n$ gebildet, wobei jeder Rückkoppeleinheit eine in einem bestimmten Winkel in Azimut und Elevation angeordnete Optik zugeordnet ist. Jede Rückkoppeleinheit 13 wird von einer als Verzögerungsleitung wirkenden Glasfaser 10 in Form einer geschlossenen Schleife 11 mit Koppler 12 gebildet. Solche Rückkoppeleinheiten sind bekannt aus der US-A 4 136 929. In der Fig. 1 ist der Aufbau der Rückkoppeleinheit 13 skizziert. Hierbei verläßt ein geringer Teil des in den Kopplerarm $12_1$ eingekoppelten Lichtes Ie den Koppler 12 im als Ausgang dienenden Kopplerarm $12_2$. Der restliche große Lichtanteil verläßt den Koppler 12 am Kopplerarm $12_3$ und wird über die als Verzögerungsleitung wirkende Glasfaserschleife 11 am Kopplerarm $12_4$ erneut zugeführt, allerdings reduziert um einen kleinen Teil dieses rückgeführten Lichtes, der den Koppler 12 am Ausgangsarm $12_2$ verläßt, während - wie vorstehend schon ausgeführt - der größere Lichtanteil über den Kopplerarm $12_3$ erneut die Glasfaserschleife 11 durchläuft.

Trifft nun ein kurzer Laserpuls auf den Laserwarnsensor, so wird in den der entsprechenden Azimut- oder Elevationsreihe zugeordneten Koppler 12 ein Lichtimpuls Ie eingekoppelt. Aufgrund der Lichtrückkopplung mittels der Glasfaserschleife 11 ist das Ausgangssignal Ia - wie in Fig. 2 veranschaulicht - eine abklingende Pulsfolge der Frequenz

$$f = I/t = c/(nL) \, .$$

Hierbei bedeutet t die Verzögerungszeit der Glasfaser 10, gegeben durch die Vakuumlichtgeschwindigkeit c, die Brechzahl des Glasfaserkerns n und die Glasfaserlänge L. Durch entsprechende Wahl der Faserlänge L läßt sich daher die Pulsfrequenz einstellen.

Das Ausgangssignal Ia wird durch eine entsprechende Elektronikschaltung frequenzselektiv detektiert. Solche frequenzselektive Schaltungen lassen sich z.B. mit Hilfe von LC- oder aktiven RC-Schwingkreisen auf einfache Weise realisieren.

In Fig. 3 ist nun ein Blockschaltbild für die Gesamtdetektion skizziert, wobei in diesem schematisch dargestellten Ausführungsbeispiel die Signale der den Winkeln a1, a2,..an zugeordneten "Augen" - d.h. die Eingangsoptiken - $Ie_1$, $Ie_2$,..$Ie_n$ den Rückkoppeleinheiten $13_1$, $13_2$ .. $13_n$ zugeführt, von denen jede auf eine feste, separate Frequenz $f_1$, $f_2$, .. $f_n$ abgestimmt ist. Deren Ausgangsimpulsfolgen werden zusammengefaßt und der Fotodiode 14 zugeführt. Die so entstandenen elektrischen Signale werden in der Auswertelektronik 15 frequenzselektiv ausgewertet und die auf diese Weise decodierten Signale den Ausgängen $A_1$, $A_2$, .. $A_n$ zugeleitet. Als Beispiel sei angegeben, daß bei einer Faserlänge von 5 m die Frequenz bei ca. 40 MHz liegen würde.

Die Forderungen an den Rückkoppler 12 lassen sich durch die Leistungsmatrix P beschreiben:

$$\begin{pmatrix} I_{a22} \\ I_{a23} \end{pmatrix} = P \times \begin{pmatrix} I_{e21} \\ I_{e24} \end{pmatrix}$$

wobei P möglichst die Form :

$$P = \begin{pmatrix} d & d \\ 1-d & 1-d \end{pmatrix}$$

aufweisen soll.

Die Größenordnung von d liegt im vorliegenden Fall bei einigen Prozent - beispielsweise 5 % - um die Dämpfung der Ausgangspulsfolge nicht zu stark zu machen. Zu diesem Zweck wird vorgeschlagen, die Rückkoppelelemente in Multimodebauweise auszubilden, wobei der Querschnitt der Kopplerfaser $12_5$, welche die Kopplerarme $12_1$ und $12_2$ bildet, nur wenige Prozent des Querschnitts der Kopplerfaser $12_6$ aufweisen soll, welche die Kopplerarme $12_3$ und $12_4$ bildet.

Rückkoppeleinheiten in Monomode-Ausführung sind bekannt, sie nutzen in dem Koppler konstruktive oder destruktive Interferenz, womit Phasenänderungen der Rückkoppelspule zu Sensorzwecke gemessen werden. Durch die hier jedoch vorgeschlagene Multimodeausbildung werden Interferenzeffekte ausgeschlossen.

Es ist weiterhin bekannt, Rückkoppeleinheiten als selektive Filter einzusetzen, wobei dann am Eingang Pulsfolgen anliegen und nur dann ein großes Ausgangssignal liefern, wenn die Pulsfolgefrequenz gleich der Eigenfrequenz der Rückkoppeleinheit ist. In der hier vorliegenden Ausführung wird jedoch die Kombination mehrerer Rückkoppeleinheiten 13 mit nachfolgender Frequenzanalyse vorgeschlagen (Fig. 3), wobei jede Rückkoppeleinheit durch einen eintreffenden Einzelpuls zu Schwingungen auf ihrer Eigenfrequenz angeregt wird.

In einer Weiterbildung der vorbeschriebenen Ausführungform sollen nun die Laserpulse von anderen Lichtquellen - beispielsweise Sonnenstrahlen, Blitze, Detonationslichtblitze etc. - unterschieden werden können. Das Kriterium hierfür liegt bekanntermaßen in der Anstiegsflanke des Pulses. Nur diejenigen Pulsfolgen, deren Einzelpulse sehr geringe Anstiegszeiten aufweisen (typischerweise weniger als 50 ns) stammen von gepulsten Laserquellen. Die Diskriminierung der jeweiligen Lichtquelle erfolgt mittels eines entsprechend abgestimmten Hochpaßfilters, welcher nur Frequenzanteile durchläßt, deren Anstiegszeiten kürzer als die genannte Schwellzeit sind, d.h. nur diejenigen Pulse, die am Ausgang des Hochpasses ein Signal liefern, werden als Laserpulse akzeptiert.

**Patentansprüche**

1.  Laserwarnsensor mit Richtungsauflösung, bei der die Winkelinformation der Azimut- und Elevationsreihen mittels unterschiedlich langer Glasfaser-Verzögerungsleitungen in eine definierte Laufzeitdifferenz zwischen Start und Stop codiert werden, **dadurch gekennzeichnet,** daß der Laserwarnsensor aus mehreren Rückkoppeleinheiten ($13_1$ - $13_n$) gebildet ist, die ausgangsseitig miteinander kombiniert sind, wobei jeder Rückkoppeleinheit (13) eine Glasfaser (10) als Verzögerungsleitung zugeordnet ist, die in Form einer geschlossenen Schleife (11) mit den Kopplerarmen der Rückkoppeleinheit ($12_3$, $12_4$) verbunden ist, und daß den Rückkoppeleinheiten ($13_1$ - $13_n$) eine Fotodiode (14) und eine frequenzselektive Auswertelektronik (15) nachgeschaltet ist.

2.  Laserwarnsensor nach Anspruch 1, **dadurch gekennzeichnet,** daß die Rückkoppelelemente in Multimodebauweise ausgebildet sind.

3.  Laserwarnsensor nach Anspruch 1 oder 2, **dadurch gekennzeichnet,** daß der Querschnitt der Kopplerfaser ($12_5$) zwischen den Kopplerarmen ($12_1$ und $12_2$), die für den Strahlein- und -ausgang dienen, kleiner als der Querschnitt der Kopplerfaser ($12_6$) ist, die zwischen den Kopplerarmen ($12_3$, $12_4$) für die Verzögerungsleitung liegt.

4.  Laserwarnsensor nach den Ansprüchen 1 bis 3, **dadurch gekennzeichnet,** daß zur Unterscheidung zwischen Laserpulsen und Licht von anderen Lichtquellen ein entsprechend abgestimmter elektronischer Hochpaß in der Auswertelektronik (15) angeordnet ist.

**Claims**

1.  Laser warning sensor with bearing resolution, wherein the angle information of the azimuth and elevation lines are encoded into a defined transit time difference between start and stop by means of fibre-optic delay lines of different lengths, **characterised in that** the laser warning sensor is composed of a plurality of feedback units ($13_1$ - $13_n$) which are at the output combined with one another, and that each feedback unit (13) is associated with a fibre optic (10) as a delay line which is connected in the form of a closed loop (11) to the coupling arms of the feedback unit ($12_3$, $12_4$), and that the feedback units ($13_1$ - $13_n$) have at their output a photo diode (14) and a frequency-selective evaluation electronic (15).

**2.** Laser warning sensor according to claim 1, **characterised in that** the feedback elements are arranged as multi-mode units.

**3.** Laser warning sensor according to claim 1 or 2, **characterised in that** the cross-section of the coupling fibre ($12_5$) between the coupling arms ($12_1$ and $12_2$) which serve the beam input and output are smaller than the cross-section of the coupling fibre ($12_6$) which is located between the coupling arms ($12_3$, $12_4$) for the delay line.

**4.** Laser warning sensor according to claims 1 to 3, **characterised in that** a respectively tuned electronic high pass is arranged in the evaluation electronic (15) for differentiating between laser pulses and light from other light sources.

**Revendications**

**1.** Détecteur d'alerte laser avec détermination de la direction, dans lequel les informations angulaires des séries d'azimut et d'élévation sont codées sous forme d'une différence définie de temps de trajet entre le départ et l'arrêt au moyen de lignes de retard en fibre de verte de différentes longueurs, caractérisé par le fait que le détecteur d'alerte laser est constitué de plusieurs unités de rétro-action ($13_1$ -$13_n$) qui sont combinées entre elles côté sortie, une fibre de verte (10) étant associée à chaque unité de rétro-action en tant que ligne de retard, laquelle fibre de verte se présente sous la forme d'une boucle (1) fermée et est connectée aux branches de l'unité de rétro-action ($12_3$, $12_4$) et par le fait qu'un photo-détecteur (14) et une électronique de traitement (15) sélective en fréquence sont montés à la suite des unités de rétro-action ($13_1$ -$13_n$).

**2.** Détecteur d'alerte laser selon la revendication 1, caractérisé par le fait que les unités de rétro-action sont du type multimode.

**3.** Détecteur d'alerte laser selon la revendication 1 ou 2, caractérisé par le fait que la section de la fibre ($12_5$) entre les branches de coupleur ($12_1$, $12_2$) qui servent à l'entrée et à la sortie du rayon est inférieure à la section de la fibre ($12_6$) située entre les branches de coupleur ($12_3$, $12_4$) pour la ligne de retard.

**4.** Détecteur d'alerte laser selon les revendications 1 à 3, caractérisé par le fait que pour distinguer des impulsions laser de la lumière provenant d'autres sources lumineuses, un filtre passe-haut électronique adapté est disposé dans l'électronique de traitement (15).

FIG.1

FIG. 2

FIG. 3